Europäisches Patentamt

European Patent Office

Office européen des brevets

(11) Publication number: **0 257 810**
**A2**

(12) **EUROPEAN PATENT APPLICATION**

(21) Application number: 87306645.0

(22) Date of filing: 28.07.87

(51) Int. Cl.⁴: **H02M 3/07**

(30) Priority: 02.08.86 GB 8618933

(43) Date of publication of application:
02.03.88 Bulletin 88/09

(84) Designated Contracting States:
DE FR NL

(71) Applicant: **PLESSEY OVERSEAS LIMITED**
**Vicarage Lane**
**Ilford Essex IGI 4AQ(GB)**

(72) Inventor: **Atkinson, Simon**
**25 Beamans Lane**
**Wootton Bassett Swindon SN4 7BU(GB)**

(74) Representative: **Nicholson, Ronald**
**Intellectual Property Department The**
**Plessey Company plc 2-60 Vicarage Lane**
**Ilford Essex IG1 4AQ(GB)**

(54) DC to DC converter.

(57) A DC to DC converter of the switched capacitor
kind is described in which controlled solid state
switches are used to effect the switching and to limit
the current passed to the capacitors in dependence
upon that required to match a load.

FIG. 4.

## DC TO DC CONVERTER

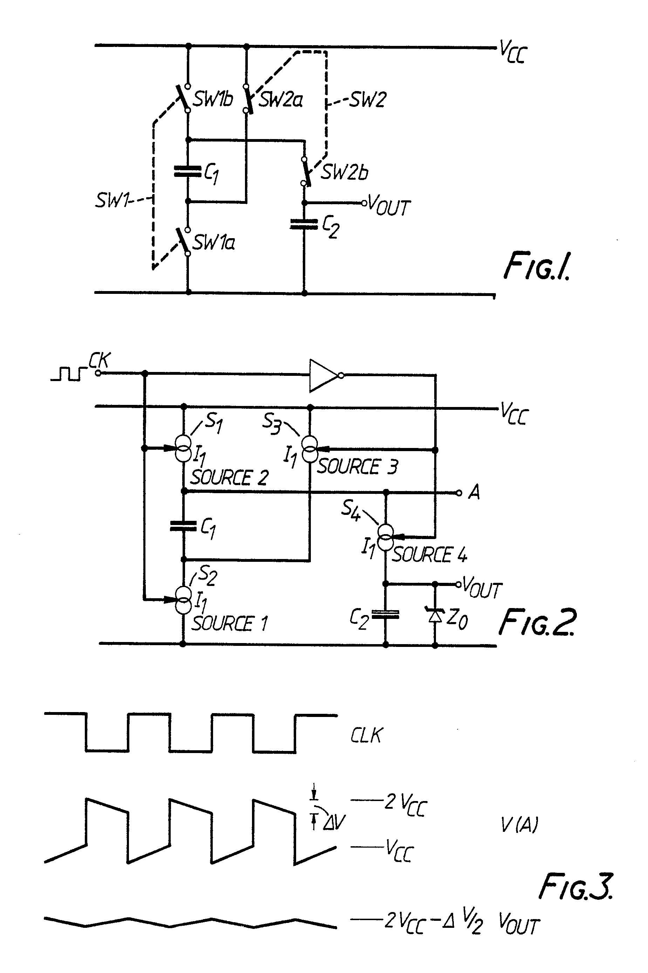

This invention relates to DC to DC converters of the switched capacitor kind. A well known voltage doubler converter of this kind is shown in Figure 1 of the accompanying drawings. As shown in the Figure, with switch SW1 closed and switch SW2 open, capacitor $C_1$ is first charged to the voltage of rail Vcc. Switch SW1 is then opened and switch SW2 is closed stacking capacitor $C_1$ on top of capacitor $C_2$ to charge capacitor $C_2$. This is repeated and, if charge losses from capacitor $C_2$ do not exceed charge gains by capacitor $C_1$, the voltage across capacitor $C_2$ will rise to twice that of said voltage Vcc. Several capacitors can be used and the stacked voltage will rise until it is equal to n times rail voltage Vcc, where n is the number of capacitors.

The arrangement shown in Figure 1 can operate as a solid state device with switches SW1 and SW2 being replaced by current sources S1 and S2 and S3 and S4 respectively. The current sources are conveniently controlled by a clock, sources S3 and S4 being clocked 180" out of phase with sources S1 and S2 as shown in Figure 2 of the accompanying drawings. Figure 3 of the accompanying drawings is a timing diagram indicating the clock pulses, the ideal voltages across capacitors $C_2$ and across capacitor $C_1$ and the variation in output voltage.

The illustrated current sources are, however, non-ideal and, instead of delivering a constant current I, are load dependent in that capacitor $C_1$ may become fully charged before the end of the clock pulse determining its charging period. If the current sources saturate, they no longer deliver current.

The output voltage may be set by a zener diode Zo.

This is inefficient, as if the output voltage endeavours to rise above the preset levels, the excess charge is dumped by the zener diode to ground. More complex arrangements provide control of the output voltage by varying the mark/space ratio of the clock pulses to vary the charging time. In all circumstances, the charging time i.e. the clock pulse length, provides for more than sufficient time for the appropriate charge to be placed on the capacitor $C_1$.

The degree of inefficiency can be exemplified if an example using Bipolar technology for the current sources, is considered. The current sources may be simple transistors or cascaded transistors in a darlington configuration. If an output current of 10mA is required, for example, as a load at twice rail Vcc, then, for 100% efficiency, 20 mA Must be drawn from rail Vcc. Assume, the transistors forming the current sources have a gain of 10, thus each source draws a base current of 2mA during the charging cycle. Over the whole clock cycle, an average of the losses due to base currents is 4mA and the power conversion efficiency = (power out/power in) x 100% is equal to 83%.

However, if the load charges to 100μA, the base current still averages 4mA but the sources saturate and the average supply in the clock cycle is 200μA from rail Vcc. The efficiency drops to 4.8%.

The above-mentioned regulatory method of varying the mark/space ratio is more efficient than mere zener diode voltage control but does not increase the efficiency of power use at low loads.

It is appreciated that losses due to switching losses per se (which are frequency dependent) or due to finite current source saturation voltages, have not been considered. The present invention seeks to eradicate or greatly minimise the power losses discussed above.

According to the present invention, a DC to DC converter comprises at least one input charge storage device, an output charge storage device, timing means for respectively initiating a charge input cycle and a voltage conversion cycle, means for connectng the input charge storage device or devices with a source during the charge input cycle and for connecting the charge input device or devices in series with the source and with the output charge storage device during a voltage conversion cycle, and means responsive to the voltage appearing on the output charge storage device for controlling the connecting means.

The connecting means conveniently comprise first bipolar means for connecting the input charge storage device or devices across a voltage source during a charge input cycle and for isolating the input charge storage device or devices from said voltage source during a conversion cycle.

The connecting means also includes second bipolar means for connecting the input charge storage device or devices in series with the source and with the output charge storage device during the conversion cycle and for isolating the output charge storage device during the charge input cycle.

The first bipolar means may be in the form of a first transistor switch between the or each input charge storage device and the source amd a second transistor switch between the or each input charge storage device and ground so as to isolate the input charge storage device when the switches are open.

The first and second transistor switches are controlled by the voltage responsive means to pass a charging current in dependence upon the output voltage of (and hence the load current on) the output charge storage device.

For maximum efficiency, the first and second transistor switches have matched characteristics so as to pass identical currents.

The second bipolar means conveniently comprises third and fourth transistor switches again having matched characteristics to pass identical currents when closed during the voltage conversion cycle.

The voltage responsive means may comprise a comparator for comparing the output voltage with a reference voltage and for developing a control voltage in dependence upon any difference therebetween. The control voltage is used to control the current passed by the first bipolar means during a charge input cycle and by the second bipolar means during a voltage conversion cycle.

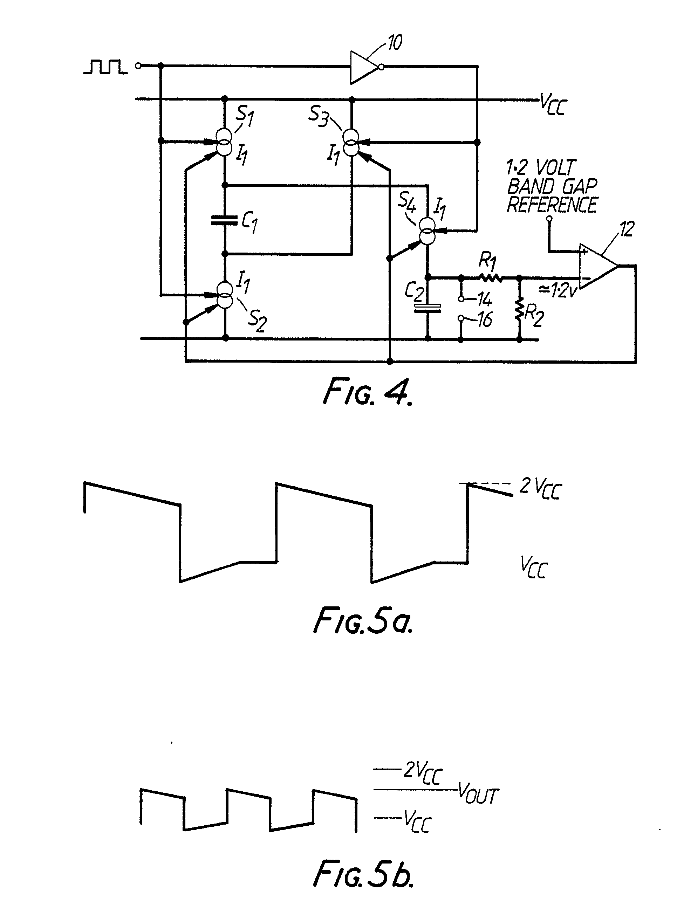

The invention will be described further, by way of example, with reference to Figures 4, 5, 6 and 7 of the accompanying drawings, in which:-

Figure 4 is a circuit diagram of a DC to DC converter according to the present invention;

Figures 5a and 5b are waveform diagrams, Figure 5a relating to prior devices and Figure 5b illustrating the waveforms to be obtained when using the circuit of Figure 4.

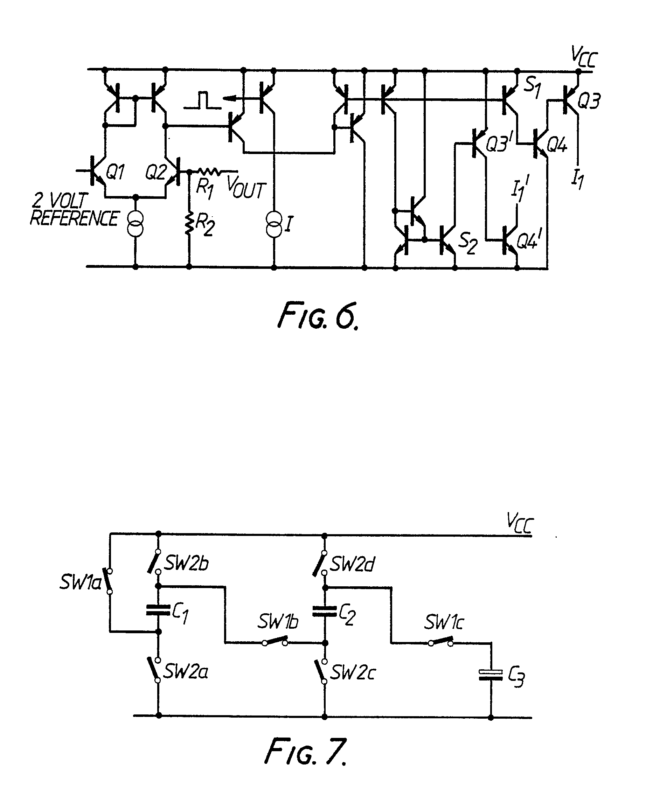

Figure 6 is a detailed circuit diagram illustrating a part of the circuit shown in Figure 4; and

Figure 7 is a simplified diagram of a voltage tripler which may use the switching means of Figure 4 and 6.

As shown in Figure 4, a DC to DC converter comprises a capacitor $C_1$ forming a first charge storage device. The capacitor $C_1$ is connectable between a rail at voltage Vcc and ground by first current sources $S_1$ and $S_2$. The current sources $S_1$ and $S_2$ can be switched on and off by clock pulses.

Second current sources $S_3$ and $S_4$ serve to connect the capacitor $C_1$ in series with a capacitor $C_2$, forming a second charge storage device, between the rail Vcc and ground. The second current sources are switched on and off by clock pulses, inverted in an inverter 10, 180° out of phase with the switching of the first current sources. The output voltage across the capacitor $C_2$ is apportioned by a voltage divider $R_1$, $R_2$ and fed to one input of a comparator 12 to the other input of which a reference voltage is applied. The output of the comparator 12 serves to control the current supplied by the first and second current sources during their on periods.

A load (not shown) may be connected across the output terminals 14, 16 of the capacitor $C_2$.

Depending upon the load current, it may be that capacitor $C_1$ does not require to be fully charged during the on period of the first current sources i.e. during a charge input cycle. If no control were to be exercised over the first current sources, constant current would be supplied at a rate such that the source saturates part way through the charge input cycle. This can readily be seen in Figure 5a and, as described above, leads to power losses. It is required that only sufficient charge is supplied to capacitor $C_1$ such that, during the voltage conversion cycle, the voltage across the capacitor $C_2$ rises to the desired output value, in this case twice Vcc. The comparator 12 monitors the value of the output voltage and the control voltage from the comparator controls the first current sources $S_1$ and $S_2$ to limit the current passed thereby so that substantially the whole charge input cycle is required to provide the necessary charge input to capacitor $C_1$. This can be seen in Figure 5b in that no saturation of the first current sources occurs.

Similarly during the voltage conversion cycle, the second current sources have their current controlled by the control voltage from the comparator 12 so that the whole of this cycle, equivalent to the length of the out-of-phase clock pulse, is required to transfer charge to capacitor $C_2$.

Figure 6 illustrates part of the circuit utilised in the preferred embodiment of the present invention. The circuit there illustrated may be fabricated of discrete components but lends itself readily to fabrication on a single chip. Figure 6 shows the comparator 12 and the first current sources. It will be appreciated that the second current sources can be formed in a similar manner.

Transistors $Q_3$ and $Q_4$ form a first transistor switch which permits the flow of a current I, to the first capacitor $C_1$ (not shown in Figure 6) during a charge input cycle. This switch is connected between the rail Vcc and the capacitor $C_1$. A second transistor switch formed of the transistor $Q_3'$ and $Q_4'$ serve to connect the capacitor $C_1$ to ground during the charge input cycle. During the voltage conversion cycle, these transistor switches are off and isolate the capacitor $C_1$. The second current sources (not shown) conversely isolate the capacitor $C_2$ and connect the capacitor $C_1$ in series with the capacitor $C_2$ during the same cycles.

The current flowing through the first and second transistor switches, for maximum efficiency, must be identical. This can readily be achieved if the transistors $Q_3$ and $Q_3'$ are of the same type and the transistors $Q_4$ and $Q_4'$ are of the same type.

Thus, transistors $Q_3$ and $Q_3'$ are PNP type transistors and transistors $Q_4$ and $Q_4'$ are NPN type transistors. The current gain of each pair is then Bp x Bn where Bp is the current gain of the PNP transistors and Bn is the current gain of the NPN transistors. Mirrored base currents are applied to $Q_4$ and $Q_3'$ during the input charge cycle which is initiated by the clock pulse as shown and which base currents are controlled by the output of comparator 12.

As stated above, similar transistor switches (not shown) to the transistor switches $Q_3$, $Q_4$ and $Q_3'$ and $Q_4'$ are provided to connect capacitors $C_1$ and $C_2$ during a voltage conversion cycle initiated by an 180° out of phase clock pulse and similarly controlled by the output of the comparator 12.

The invention is not confined to the precise details of the foregoing example and variations may be made thereto. For instance, a voltage tripler arrangement is shown in Figure 7. In this embodiment, matched transistor switches SW1a, SW1b and SW1c are provided as the second current sources which are 'on' during the voltage conversion cycle and matched transistor switches SW2a, SW2b, SW2c and SW2d are provided as first current sources which are 'on' during the charge input cycle. A comparator (not shown) compares the output voltage of a capacitor $C_3$ with a reference voltage and controls the current supplied by the transistors to the capacitors $C_1$, $C_2$ and $C_3$.

By appropriately controlling the charge passed to the capacitor $C_1$ (or $C_1$ and $C_2$ in Figure 7), the output voltage can be set at any value from zero to n times the rail voltage Vcc, where n is the number of capacitors.

**Claims**

1. A DC to DC converter comprising at least one input charge storage device, an output charge storage device, timing means for repetitively initiating a charge input cycle and a voltage conversion cycle, means for connecting the input charge storage device or devices with a source during a charge input cycle and for connecting the charge input device or devices in series with a source and the output charge storage device during a voltage conversion cycle, and means responsive to the voltage appearing on the output charge storage device for controlling the connecting means.

2. A converter as claimed in claim 1 wherein the connecting means comprises first bipolar means for connecting the input charge storage device or devices with a source during a charge input cycle and for isolating the input charge storage device or devices from the source during a voltage conversion cycle.

3. A converter as claimed in claim 1 or 2 wherein the connecting means includes second bipolar means for connecting the input charge storage device or devices in series with a source and with the output charge storage device during a voltage conversion cycle and for isolating the output charge storage device during a charging cycle.

4. A converter as claimed in claim 2 or claims 2 and 3 wherein the first bipolar means comprises a first transistor switch between the or each of the input charge storage devices and a source, and a second transistor switch between the or each input charge storage device and ground so as to isolate the or each input charge storage device when the switches are open.

5. A converter as claimed in claim 3 or claim 3 and 4 wherein the second bipolar means comprises transistor switches for connecting the output charge storage device in series with the or each input charge storage device and a source during a voltage conversion cycle.

6. A converter as claimed in claim 4 and 5 wherein the transistor switches are controlled by the voltage responsive means, when closed, to pass a current in dependence upon the voltage of the output charge storage device.

7. A converter as claimed in claim 6 wherein the transistor switches have matched characteristics so as to pass identical currents when closed.

8. A converter as claimed in claim 4, 5, 6 or 7 wherein each transistor switch comprises a PNP and an NPN transistor in darlington configuration.

9. A converter as claimed in any preceding claim wherein the voltage responsive means comprises a comparator, a first input to the comparator being related to the voltage on the output charge storage device and a second input to the comparator being a reference voltage, a difference signal being output by the comparator to control the connecting means.

10. A DC to DC converter substantially as hereinbefore described with reference to Figure 4 or Figure 7, and Figure 6 of the accompanying drawings.

FIG.1.

FIG.2.

FIG.3.

FIG. 4.

FIG. 5a.

FIG. 5b.

FIG. 6.

FIG. 7.